# EUROPEAN PATENT APPLICATION

(11) **EP 2 728 871 A2**
(43) Date of publication of application: **07.05.2014**
(21) Application number: 12805088.7
(22) Date of filing: 02.07.2012
(51) Int. Cl.: H04N 7/26

(54) **METHOD AND APPARATUS FOR ENCODING MOTION INFORMATION USING SKIP MODE, AND METHOD AND APPARATUS FOR DECODING SAME**

(30) Priority: 30.06.2011 US 201161503162 P
(71) Applicant: Samsung Electronics Co., Ltd., Suwon-si, Gyeonggi-do 443-742 (KR)
(72) Inventor: LEE, Tammy, Seoul 137-070 (KR); CHEN, Jianle, Suwon-si Gyeonggi-do 443-725 (KR); HAN, Woo-jin, Suwon-si Gyeonggi-do 443-714 (KR)
(74) Representative: Clark, David James
(86) International application number: PCT/KR2012/005245
(87) International publication number: WO 2013/002620

(57) **Abstract**

An encoding method using a skip mode, the method including obtaining a plurality of motion information candidates of a current prediction unit by using at least one prediction unit related to the current prediction unit; determining a most probable predictor candidate that is most likely to be selected from among the plurality of motion information candidates, according to a certain standard; and when a prediction mode of the current prediction unit is a most probable skip mode using the determined most probable prediction candidate, encoding a flag indicating the most probable skip mode.

## Description

### TECHNICAL FIELD

The present invention relates to methods and apparatuses for encoding and decoding an image, and more particularly, to methods and apparatuses for effectively encoding and decoding motion information of a current prediction unit.

### BACKGROUND ART

Recently, as high definition video contents have become widely used, a need for a video codec having a higher coding efficiency than a conventional video codec such as MPEG-4 H.264/MPEG-4 advanced video coding (AVC) has increased.

Thus, a high efficiency video coding (HEVC) standard has been prepared as a next generation video encoding/decoding technology by the joint collaborative team on video coding (JCT-VC).

According to motion compensation, which is a technology for removing temporal redundancy in a video signal, compression efficiency is increased by transmitting a residual signal that is a difference value between an original video signal and a reference signal indicated by a motion vector. In general, motion information and a residual value of each block, which are an encoding result obtained by encoding each block by using motion compensation, are transmitted to a decoder.

A skip mode is a mode in which information about a prediction mode, information about a partition size, information about a reference index, information about a prediction direction, information about a motion vector difference, and residual information are not transmitted.

### DETAILED DESCRIPTION OF THE INVENTION TECHNICAL PROBLEM

To solve the above and/or other problems, the present invention provides encoding and decoding methods and apparatuses, which increase an encoding efficiency to reduce overhead when encoding is performed by using a plurality of motion information candidate groups in a low bit rate environment. In addition, the present invention also provides a computer readable recording medium having recorded thereon a program for executing the above-described methods.

### TECHNICAL SOLUTION

According to an aspect of the present invention, there is provided a encoding method using a skip mode, the encoding method including obtaining a plurality of motion information candidates of a current prediction unit by using at least one prediction unit related to the current prediction unit; determining a most probable predictor candidate that is most likely to be selected from among the plurality of motion information candidates, according to a certain standard; and when a prediction mode of the current prediction unit is a most probable skip mode using the determined most probable prediction candidate, encoding a flag indicating the most probable skip mode.

The encoding method may further include, when the prediction mode of the current prediction unit is a non-most probable skip mode using a motion information candidate instead of the most probable prediction candidate, determining a motion information candidate other than the most probable prediction candidate from among the plurality of motion information candidates, as motion information about the current prediction unit; and encoding a flag indicating the non-most probable skip mode and index information about the motion information candidate other than the most probable prediction candidate.

The non-most probable skip mode may be selected when the number of the motion information candidates is equal to or greater than 2, and index information about a motion information candidate other than the determined most probable prediction candidate may be encoded when the number of the motion information candidates is equal to or greater than 3.

The motion information candidate other than the most probable prediction candidate may be a motion information candidate that is most likely to be selected from among motion information candidates other than the most probable prediction candidate.

The encoding may include reducing the number of pieces of index information of the motion information candidate other than the most probable prediction candidate by 1 and encoding the index information.

The determining may include determining a motion information candidate having index information 0 from among the motion information candidates, as the most probable prediction candidate.

The determining of the most probable prediction candidate may include determining a motion information candidate that is most selected by a plurality of prediction units that are spatially adjacent to the current prediction unit, as the most probable prediction candidate.

According to another aspect of the present invention, there is provided an encoding apparatus using a skip mode, the encoding apparatus including a motion information candidate group generating unit for obtaining a plurality of motion information candidates of a current prediction unit by using at least one prediction unit related to the current prediction unit; a most probable prediction candidate determining unit for determining a most probable predictor candidate that is most likely to be selected from among the plurality of motion information candidates, according to a certain standard; and a motion information encoding unit for, when a prediction mode of the current prediction unit is a most probable skip mode using the determined most probable prediction candidate, encoding a flag indicating the most probable skip mode.

According to another aspect of the present invention, there is provided a decoding method using a skip mode, the decoding method including obtaining a plurality of motion information candidates of a current prediction unit by using at least one prediction unit related to the current prediction unit; determining a most probable predictor candidate that is most likely to be selected from among the plurality of motion information candidates, according to a certain standard; obtaining a flag indicating a prediction mode of the current prediction unit from a bitstream; and when the flag indicates a most probable skip mode using the most probable prediction candidate, obtaining the most probable prediction candidate as motion information of the current prediction unit.

According to another aspect of the present invention, there is provided a decoding apparatus using a skip mode, the decoding apparatus including a motion information candidate group generating unit for obtaining a plurality of motion information candidates of a current prediction unit by using at least one prediction unit related to the current prediction unit; a most probable prediction candidate determining unit for determining a most probable predictor candidate that is most likely to be selected from among the plurality of motion information candidates, according to a certain standard; an entropy decoding unit for obtaining a flag indicating a prediction mode of the current prediction unit from a bitstream; and a motion information decoding unit for, when the flag indicates a most probable skip mode using the most probable prediction candidate, obtaining the most probable prediction candidate as motion information of the current prediction unit.

According to another aspect of the present invention, there is provided a computer readable recording medium having recorded thereon a program for executing the encoding method.

According to another aspect of the present invention, there is provided a computer readable recording medium having recorded thereon a program for executing the decoding method.

### ADVANTAGEOUS EFFECTS

As a most probable prediction candidate included in a motion information candidate group is more similar to motion information of a current prediction unit, an encoding efficiency of a skip mode is increased. In addition, in a low bit rate environment, overhead is reduced.

### DESCRIPTION OF THE DRAWINGS

The above and other features and advantages of the present invention will become more apparent by describing in detail exemplary embodiments thereof with reference to the attached drawings in which:
FIG. 1 is a block diagram of an encoding apparatus according to an embodiment of the present invention;
FIG. 2 is a flowchart of an encoding method using a skip mode, according to an embodiment of the present invention;
FIG. 3 is a diagram for explaining an encoding process using context-based adaptive binary arithmetic coding (CABAC), according to an embodiment of the present invention;
FIG. 4 is a diagram for explaining an encoding process using context-based adaptive variable length coding (CAVLC) or a low complexity entropy coder (LCEC), according to an embodiment of the present invention;
FIG. 5 is a block diagram of a decoding apparatus using a skip mode, according to an embodiment of the present invention; and
FIG. 6 is a flowchart of a decoding method using a skip mode, according to an embodiment of the present invention.

### MODE OF THE INVENTION

Most of the terms used herein are general terms that have been widely used in the technical art to which the present invention pertains. However, some of the terms used herein may be created to reflect intentions of technicians in this art, precedents, or new technologies. Also, some of the terms used herein may be arbitrarily chosen by the present applicant. In this case, these terms are defined in detail below. Accordingly, the specific terms used herein should be understood based on the unique meanings thereof and the whole context of the present invention.

In the present specification, it should be understood that the terms, such as 'including' or 'having,' etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added. Also, the terms, such as 'unit' or 'module', etc., should be understood as a unit that processes at least one function or operation and that may be embodied in a hardware manner, a software manner, or a combination of the hardware manner and the software manner. As used herein, expressions such as "at least one of," when preceding a list of elements, modify the entire list of elements and do not modify the individual elements of the list.

Hereinafter, the present invention will be described in detail by explaining exemplary embodiments of the invention with reference to the attached drawings.

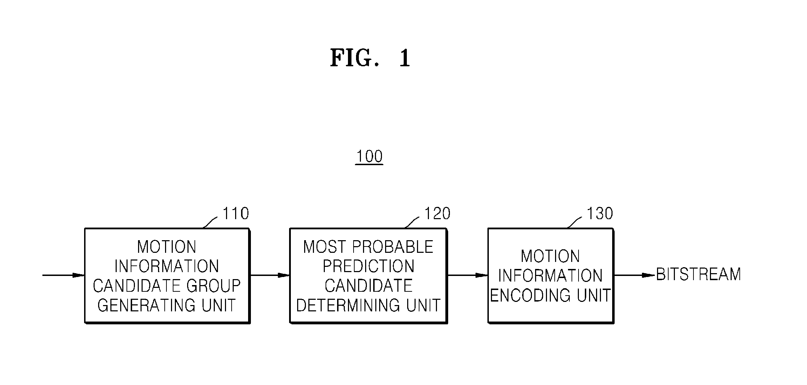

FIG. 1 is a block diagram of an encoding apparatus 100 according to an embodiment of the present invention. The encoding apparatus 100 includes a motion information candidate group generating unit 110, a most probable prediction candidate determining unit 120, and a motion information encoding unit 130. It will be understood by one of ordinary skill in the art that the encoding apparatus 100 includes general-use components in addition to the components shown in FIG. 1.

The encoding apparatus 100 processes image data input thereto and outputs the image data as a bitstream. In detail, the encoding apparatus 100 splits each of pictures included in the input image data into a plurality of prediction units PUs, and encodes and outputs the PUs.

According to an embodiment of the present invention, a spatial domain may be hierarchically classified according to color depths. A prediction unit is a data unit having a size of 32x32, 64x64, 128x128, 256x256, etc., wherein a shape of the data unit is a square having a width and length in powers of 2, which is greater than 8. The encoding apparatus 100 may variously select a size or shape of a prediction unit for processing the image data.

The motion information candidate group generating unit 110 obtains a plurality of motion information candidates about a current prediction unit. That is, the motion information candidate group generating unit 110 may obtain a motion information candidate from the image data by using at least one prediction unit that is related to the current prediction unit. Prediction units that are referred to by the motion information candidate group generating unit 110 may include prediction units that are spatially or temporally collocated to the current prediction unit.

The most probable prediction candidate determining unit 120 determines a most probable prediction candidate from among a plurality of motion information candidates. In detail, the most probable prediction candidate determining unit 120 determines a motion information candidate that is most likely to be selected, according to a certain standard. As will be described later, the most probable prediction candidate may be implicitly selected by an encoder side and a decoder side.

The most probable prediction candidate determining unit 120 may determine the most probable prediction candidate via various methods and algorithms. According to an embodiment of the present invention, the most probable prediction candidate determining unit 120 may determine a first motion information candidate having an index 0 from among a plurality of motion information candidates, as the most probable prediction candidate.

According to another embodiment of the present invention, the most probable prediction candidate determining unit 120 may determine a motion information candidate that is most selected from adjacent prediction units, as the most probable prediction candidate. Alternatively, the most probable prediction candidate determining unit 120 may determine a motion information candidate that is most selected during a certain period, as the most probable prediction candidate.

As another example, the most probable prediction candidate determining unit 120 may compare a region of a reconstructed template of the current prediction unit with a another prediction unit and may determine a motion information candidate of a prediction unit having a smallest difference with the current prediction unit as the most probable prediction candidate. That is, the most probable prediction candidate determining unit 120 may compare a region having a certain shape, which connects left and right sides of the current prediction unit to each other, with another prediction unit and may determine the most probable prediction candidate.

As another example, the most probable prediction candidate determining unit 120 may determine a motion information candidate having a smallest distance of motion from among a plurality of motion information candidates, as the most probable prediction candidate. That is, a motion information candidate having a smallest distance from the current prediction unit may be determined as the most probable prediction candidate.

In addition to the above-described examples, the most probable prediction candidate determining unit 120 may determine the most probable prediction candidate via various other methods and algorithms.

The motion information encoding unit 130 encodes a flag indicating a prediction mode of the current prediction unit. A prediction mode of a prediction unit may include at least one of an intra mode, an inter mode, and a skip mode. The prediction mode will now be described in more detail.

The skip mode is a mode for encoding index information about motion information of the current prediction unit and a flag indicating the skip mode. That is, in the skip mode, a motion vector difference (MVD) is set as 0 and residual information that is information about the MVD is not encoded.

Hereinafter, two cases of the skip mode are described in more detail.

First, a most probable skip mode is a mode using a most probable prediction candidate. That is, the most probable prediction candidate is implicitly determined by an encoder side and a decoder side as motion information of the current prediction unit.

Thus, the decoder side may previously recognize a determination result of the most probable prediction candidate according to a certain standard and the encoder side may not have to transmit index information about the current prediction unit. In other words, in the most probable skip mode, only a flag indicating that a prediction mode of the current prediction unit is the most probable skip mode is encoded.

Second, a non-most probable skip mode is a mode using a motion information candidate instead of the most probable prediction candidate. That is, the non-most probable skip mode is a mode in which a motion information candidate other than the most probable prediction candidate is determined as motion information of the current prediction unit, from among a plurality of motion information candidates.

In the non-most probable skip mode, the encoder side encodes index information about motion information of the current prediction unit together with a flag. That is, index information about a motion information candidate other than the most probable prediction candidate is encoded as motion information of the current prediction unit. Thus, in the non-most probable skip mode, in addition to a flag indicating a prediction mode, an additional syntax about index information is also encoded and transmitted.

When the prediction mode of the current prediction unit is the most probable skip mode, the motion information encoding unit 130 encodes a "most probable skip_flag" that is a flag indicating the most probable skip mode. In addition, when the prediction mode of the current prediction unit is the non-most probable skip mode, the motion information encoding unit 130 encodes a "non-most probable skip_flag". As described above, in the non-most probable skip mode, the motion information encoding unit 130 may also encode index information about motion information of the current prediction unit in addition to a flag.

Data encoded by the motion information encoding unit 130 is output as a bitstream from the encoding apparatus 100 and is transmitted to the decoder side.

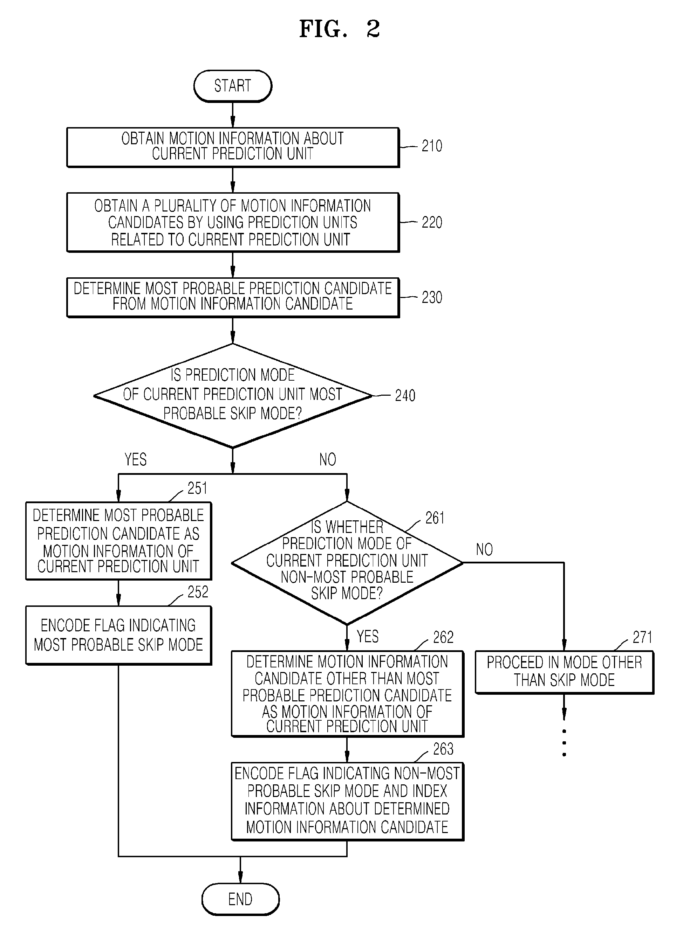

FIG. 2 is a flowchart of an encoding method using a skip mode, according to an embodiment of the present invention. The encoding method shown in FIG. 2 includes time-series operations performed by the encoding apparatus 100, the motion information candidate group generating unit 110, the most probable prediction candidate determining unit 120, and the motion information encoding unit 130 shown in FIG. 1. Thus, although not described below, the detailed description of the components shown in FIG. 1 is also applied to the encoding method shown in FIG. 2.

In operation 210, the encoding apparatus 100 performs motion prediction on a current prediction unit to obtain motion information about the current prediction unit.

In operation 220, the encoding apparatus 100 obtains a plurality of motion information candidates by using prediction units related to the current prediction unit. That is, the encoding apparatus 100 obtains a plurality of motion information candidates (that is, a motion information candidate group) from motion information of prediction units that are spatially or temporally collocated to the current prediction unit. According to an embodiment of the present invention, prediction units that are spatially adjacent to a left side or a right side of the current prediction unit may be used to obtain the motion information candidate.

In operation 230, the encoding apparatus 100 determines a most probable prediction candidate from the motion information candidate group. That is, the encoding apparatus 100 determines a motion information candidate that is most likely to be selected from a plurality of motion information candidates, according to a certain standard. As described with reference to FIG. 1, the most probable prediction candidate may be determined via various methods and algorithms.

In operation 240, whether a prediction mode of the current prediction unit is the most probable skip mode is determined. When the prediction mode of the current prediction unit is the most probable skip mode, the encoding method proceeds to operation 251. When the prediction mode of the current prediction unit is not the most probable skip mode, the encoding method proceeds to operation 261.

In operation 251, the encoding apparatus 100 determines the most probable prediction candidate as motion information about the current prediction unit. That is, since the prediction mode of the current prediction unit is the most probable skip mode, the encoding apparatus 100 determines the most probable prediction candidate that is previously selected from among a plurality of motion information candidates as the motion information of the current prediction unit.

In operation 252, the encoding apparatus 100 encodes a flag indicating the most probable skip mode. That is, the encoding apparatus 100 does not have to encode index information about motion information of the current prediction unit and encodes only the flag indicating a prediction mode. Since the decoder side may implicitly determine the most probable prediction candidate, additional information other than the flag does not have to be transmitted.

In operation 261, whether the prediction mode of the current prediction unit is a non-most probable skip mode is determined. When the prediction mode is the non-most probable skip mode, the encoding method proceeds to operation 262. When the prediction mode is not the non-most probable skip mode, the encoding method proceeds to operation 271.

In operation 262, the encoding apparatus 100 determines a motion information candidate other than the most probable prediction candidate as motion information of the current prediction unit. That is, the encoding apparatus 100 may determine the motion information candidate other than the most probable prediction candidate from among the plurality of motion information candidates obtained in operation 220, as the motion information of the current prediction unit.

According to an embodiment of the present invention, the encoding apparatus 100 may determine a motion information candidate that is most likely to be selected from among motion information candidates other than the most probable prediction candidate (that is, a motion information candidate that is second most likely to be selected from among the motion information candidates obtained in operation 220) as the motion information of the current prediction unit.

In operation 263, the encoding apparatus 100 encodes a flag indicating the non-most probable skip mode and index information about the determined motion information candidate. That is, index information indicating a motion information candidate determined as the motion information of the current prediction unit from among a plurality of motion information candidates may be encoded together with a flag indicating a prediction mode.

In operation 271, since the prediction mode of the current prediction unit does not correspond to the two types of skip modes, the encoding apparatus 100 performs encoding in a prediction mode other than a skip mode.

According to an embodiment of the present invention, the encoding apparatus 100 may select the non-most probable skip mode when the number of motion information candidates is equal to or greater than 2. That is, the non-most probable skip mode may not be selected when the number of the motion information candidate is 1.

When the number of the motion information candidate is 1, since the only motion information candidate is the most probable prediction candidate, the encoding apparatus 100 may not have to proceed to the non-most probable skip mode.

According to another embodiment of the present invention, when the number of motion information candidates is equal to or greater than 3, the encoding apparatus 100 may encode index information about motion information of the current prediction unit.

When the number of the motion information candidate is 1, the non-most probable skip mode may not have to be selected, as described above. In addition, in a non-most probable skip mode in which the number of the motion information candidates is 2, motion information of the current prediction unit corresponds to a motion information candidate instead of a most probable prediction candidate.

That is, since the number of pieces of motion information other than motion information of the most probable prediction candidate from among motion information candidates is 1, if the number of the motion information candidates is 2, index information does not have to be encoded, despite the non-most probable skip mode. In other words, the decoder side may recognize a motion information candidate from which the motion information of the current prediction unit is encoded, from only a flag indicating the non-most probable skip mode.

When the number of the motion information candidates is equal to or greater than 3, although the most probable prediction candidate is excluded, information about a motion information candidate from which the motion information of the current prediction unit is encoded is required. Thus, the encoding apparatus 100 encodes index information together with a flag indicating a prediction mode.

According to another embodiment of the present invention, in the non-most probable skip mode for encoding a motion information candidate other than the most probable prediction candidate, the encoding apparatus 100 may reduce the number of pieces of index information of the motion information candidate by 1 and may encode the index information.

In detail, when the motion information candidate encoded in the non-most probable skip mode has a higher number of pieces of index information than that of index information of the most probable prediction candidate, the encoding apparatus 100 may reduce the number of pieces of the index information of the motion information candidate and may encode the index information. Since only a flag indicting a prediction mode is encoded in the most probable skip mode, index information of the most probable prediction candidate does not have to be encoded.

For example, the encoding apparatus 100 may determine a first motion information candidate (a motion information candidate having an index 0) according to a certain standard from among five motion information candidates, as the most probable prediction candidate. Thus, when index information of a third motion information candidate (a motion information candidate having an index 2) is encoded in the non-most probable skip mode, the index information may be encoded to have an index 1 instead of an index 2.

This is because, since index information of the most probable prediction candidate does not have to be encoded in the most probable skip mode, the encoding apparatus 100 may consider only four motion information candidates other than the first motion information candidate from among five motion information candidates, in the non-most probable skip mode. Thus, the encoding apparatus 100 may reduce the number of pieces of index information of four motion information candidates by 1 and may encode the index information. In other words, a third motion information candidate from among five motion information candidates may be encoded as a second motion information candidate from among four reduced motion information candidates. A decoding apparatus 500 may receive and parse a bitstream and then may increase the number of pieces of index information by 1 and may encode the index information.

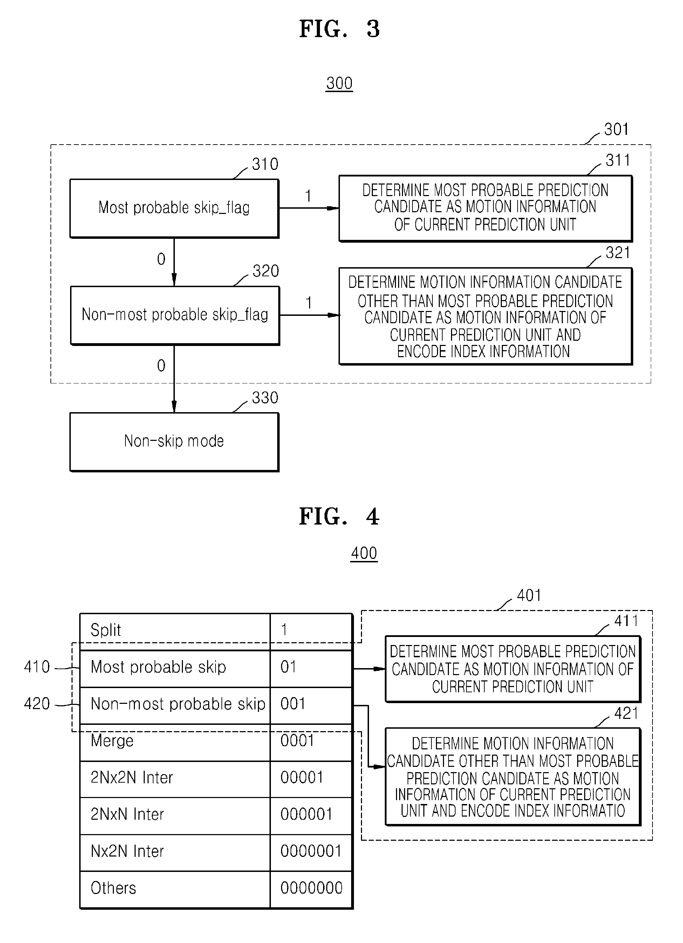

FIG. 3 is a diagram for explaining an encoding process using context-based adaptive binary arithmetic coding (CABAC), according to an embodiment of the present invention.

When '1' is input (311), a most probable skip_flag 310 is encoded and it is indicated that a prediction mode of the current prediction unit is a most probable skip mode. That is, the most probable prediction candidate is determined as motion information of the current prediction unit.

When '01' is input (321), a non-most probable skip_flag 320 is encoded and it is indicated that the prediction mode of the current prediction unit is a non-most probable skip mode. Thus, a motion information candidate other than the most probable prediction candidate is determined as motion information of the current prediction unit. In this case, in addition to the non-most probable skip_flag 320, index information about the motion information candidate determined as the motion information of the current prediction unit is encoded.

When '00' is input (330), since the prediction mode of the current prediction unit is not a skip mode (301), the encoding apparatus 100 may perform encoding in an intra mode, an inter mode, or the like.

FIG. 4 is a diagram for explaining an encoding process using context-based adaptive variable length coding (CAVLC) or a low complexity entropy coder (LCEC), according to an embodiment of the present invention.

In a most probable skip mode (410), '01' is encoded. That is, a most probable prediction candidate is determined as motion information of the current prediction unit (411).

In a non-most probable skip mode (420), '001' is encoded. That is, a motion information candidate other than the most probable prediction candidate is determined as motion information of the current prediction unit, index information indicating that the motion information candidate other than the most probable prediction candidate is determined as motion information of the current prediction unit is additionally encoded (421).

As described with reference to FIG. 3, in a prediction mode other than the skip mode (401), the encoding apparatus 100 may perform encoding in various modes such as a merge mode, an inter mode, or the like.

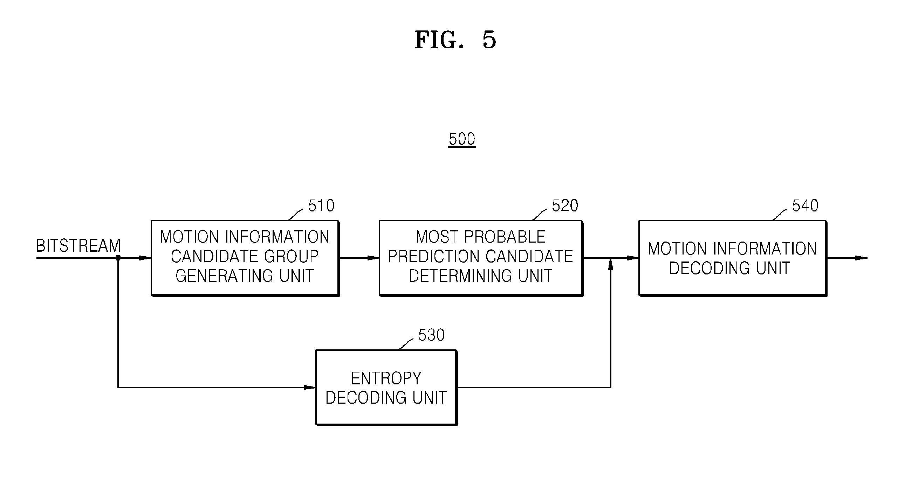

FIG. 5 is a block diagram of a decoding apparatus 500 using a skip mode, according to an embodiment of the present invention.

The decoding apparatus 500 includes a motion information candidate group generating unit 510, a most probable prediction candidate determining unit 520, an entropy decoding unit 530, and a motion information decoding unit 540. It will be understood by one of ordinary skill in the art that the decoding apparatus 500 includes general-use components in addition to the components shown in FIG. 5.

The decoding apparatus 500 receives a bitstream and decodes encoded image data. That is, the decoding apparatus 500 processes image data received from the encoding apparatus 100 on a prediction unit-by-prediction unit basis and restores the original image data.

The motion information candidate group generating unit 510 obtains a plurality of motion information candidates of the current prediction unit. That is, the motion information candidate group generating unit 510 may obtain at least one motion information candidate by using prediction units related to the current prediction unit included in the bitstream. As described with reference to FIG. 1, like in the encoding apparatus 100, prediction units that are referred to by the motion information candidate group generating unit 510 may include prediction units that are spatially or temporally collocated to the current prediction unit.

The most probable prediction candidate determining unit 520 determines a most probable prediction candidate from among motion information candidates. The most probable prediction candidate determining unit 520 determines the most probable prediction candidate from among a plurality of motion information candidates by using the same standard or method as in the encoding apparatus 100. That is, the most probable prediction candidate is implicitly determined by the encoding apparatus 100 and the decoding apparatus 500 by using the same standard and/or method.

The most probable prediction candidate determining unit 520 may determine the most probable prediction candidate via various methods and algorithms, like in the encoding apparatus 100.

The entropy decoding unit 530 obtains a flag indicating a prediction mode of the current prediction unit from a bitstream. That is, the entropy decoding unit 530 may obtain a flag indicating that the prediction is at least one of a most probable skip mode, a non-most probable skip mode, and a mode other than a skip mode.

According to an embodiment of the present invention, when the prediction mode of the current prediction unit is a non-most probable skip mode or a mode other than a skip mode, the entropy decoding unit 530 may obtain index information indicating motion information of the current prediction unit from a bitstream.

As described above, unlike in the most probable skip mode, in the non-most probable skip mode, an encoder side may also additionally encode and transmit index information indicating motion information in addition to a flag. Thus, the entropy decoding unit 530 may obtain the index information that is additionally transmitted, from a bitstream.

The motion information decoding unit 540 obtains the motion information of the current prediction unit according to a prediction mode indicated by the flag obtained by the entropy decoding unit 530.

In more detail, when the prediction mode is a most probable skip mode, the motion information decoding unit 540 may obtain the most probable prediction candidate determined by the most probable prediction candidate determining unit 520 as the motion information of the current prediction unit. As described above, an encoder side and a decoder side may previously determine a motion information candidate that is most likely to be selected for the current prediction unit. Thus, when a flag indicating that the most probable prediction candidate is selected is received, the motion information candidate that is previously determined may be obtained as motion information of the current prediction unit without additional index information.

When the prediction mode is the non-most probable skip mode, the motion information decoding unit 540 obtains a motion information candidate other than the most probable prediction candidate as motion information of the current prediction unit. That is, the motion information decoding unit 540 may obtain motion information of the current prediction unit by using the index information obtained by the entropy decoding unit 530.

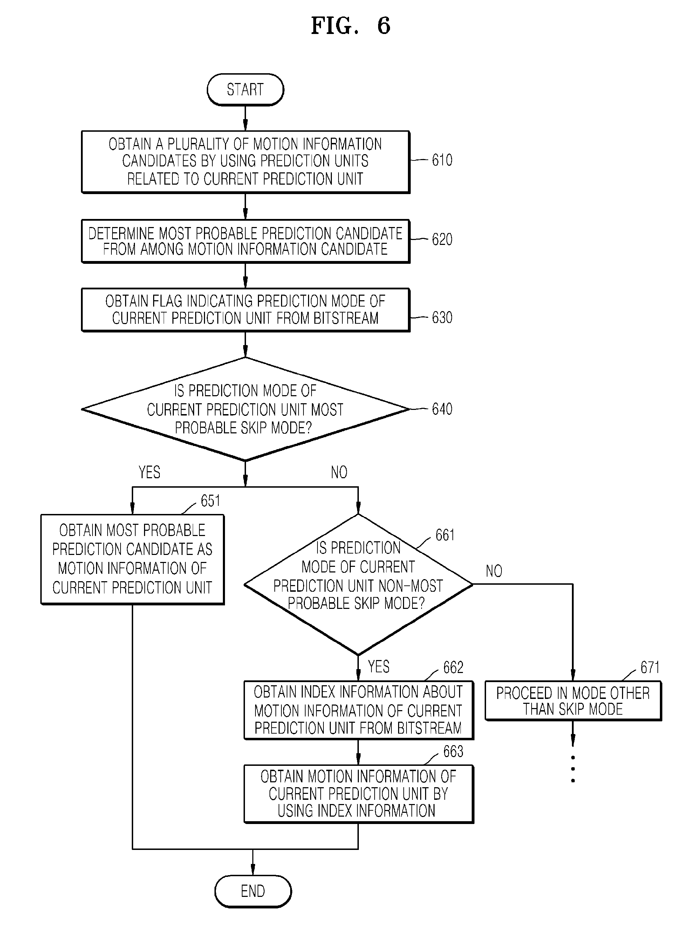

FIG. 6 is a flowchart of a decoding method using a skip mode, according to an embodiment of the present invention.

The decoding method shown in FIG. 6 includes time-series operations performed by the decoding apparatus 500, the motion information candidate group generating unit 110, the most probable prediction candidate determining unit 120, the entropy decoding unit 530, and the motion information decoding unit 540 shown in FIG. 5. Thus, although not described below, the detailed description of the components shown in FIG. 5 may also be applied to the encoding method shown in FIG. 6.

In operation 610, the decoding apparatus 500 obtains a plurality of motion information candidates by using prediction units related to the current prediction unit. As described with reference to FIG. 2, the decoding apparatus 500 may obtain motion information candidates with reference to prediction units that are spatially or temporally collocated to the current prediction unit.

In operation 620, the decoding apparatus 500 determines the most probable prediction candidate from among motion information candidates. The decoding apparatus 500 may determine the most probable prediction candidate by using the same standard or method as in the encoding apparatus 100. A method and algorithm for determining the most probable prediction candidate in the encoding apparatus 100 and the decoding apparatus 500 may be variously selected, as described with reference to FIG. 1.

In operation 630, the decoding apparatus 500 obtains a flag indicating a prediction mode of the current prediction unit from a bitstream.

Then, in operation 640, when the flag indicates a prediction mode corresponding to the most probable skip mode, the decoding method proceeds to operation 651. Otherwise, the decoding method proceeds to operation 661.

In operation 651, the decoding apparatus 500 obtains the most probable prediction candidate as motion information of the current prediction unit. That is, since only the flag indicating the most probable skip mode is received, the decoding apparatus 500 may decode the current prediction unit by using the most probable prediction candidate determined in operation 620 without additional information.

In operation 661, whether the flag indicating a prediction mode corresponds to the non-most probable skip mode is determined. When the flag corresponds to the non-most probable skip mode, the decoding method proceeds to operation 662. Otherwise, the decoding method proceeds to operation 671.

In operation 662, the decoding apparatus 500 obtains index information about the current prediction unit. That is, since decoding is performed by using a motion information candidate other than the most probable prediction candidate, the decoding apparatus 500 requires additional information about motion information of the current prediction unit. Thus, the decoding apparatus 500 may decode index information indicating motion information.

In operation 663, the decoding apparatus 500 obtains motion information of the current prediction unit by using index information. That is, the decoding apparatus 500 may restore the current prediction unit by using index information indicating motion information of the current prediction unit.

As described with reference to FIG. 2, when the number of pieces of index information is reduced by 1 and the index information is encoded in the non-most probable skip mode, the decoding apparatus 500 may increase the number of pieces of index information and may decode the index information.

In operation 671, the decoding apparatus 500 may perform decoding in a mode other than the skip mode.

The embodiments of the present invention may be written as computer programs and can be implemented in general-use digital computers that execute the programs using a computer readable recording medium. In addition, a structure of data used in the above-described method may be recorded in a computer readable recording medium through various methods. Examples of the computer readable recording medium include magnetic storage media (e.g., ROMs, RAMs, universal serial buses (USBs), floppy disks, hard disks, etc.), optical recording media (e.g., CD-ROMs, or DVDs), and storage media such as PC interfaces (e.g., PCI, PCI-express, WiFi, etc.).

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An encoding method using a skip mode, the encoding method comprising:
obtaining a plurality of motion information candidates of a current prediction unit by using at least one prediction unit related to the current prediction unit;
determining a most probable predictor candidate that is most likely to be selected from among the plurality of motion information candidates, according to a certain standard; and
when a prediction mode of the current prediction unit is a most probable skip mode using the determined most probable prediction candidate, encoding a flag indicating the most probable skip mode.

2. The encoding method of claim 1, further comprising:
when the prediction mode of the current prediction unit is a non-most probable skip mode using a motion information candidate instead of the most probable prediction candidate, determining a motion information candidate other than the most probable prediction candidate from among the plurality of motion information candidates, as motion information about the current prediction unit; and
encoding a flag indicating the non-most probable skip mode and index information about the motion information candidate other than the most probable prediction candidate.

3. The encoding method of claim 2, wherein the non-most probable skip mode is selected when the number of the motion information candidates is equal to or greater than 2, and
wherein index information about a motion information candidate other than the determined most probable prediction candidate is encoded when the number of the motion information candidates is equal to or greater than 3.

4. The encoding method of claim 2, wherein the motion information candidate other than the most probable prediction candidate is a motion information candidate that is most likely to be selected from among motion information candidates other than the most probable prediction candidate.

5. The encoding method of claim 2, wherein the encoding comprises: reducing the number of pieces of index information of the motion information candidate other than the most probable prediction candidate by 1 and encoding the index information.

6. The encoding method of claim 1, wherein the determining comprises determining a motion information candidate having index information 0 from among the motion information candidates, as the most probable prediction candidate.

7. The encoding method of claim 1, wherein the determining of the most probable prediction candidate comprises determining a motion information candidate that is most selected by a plurality of prediction units that are spatially adjacent to the current prediction unit, as the most probable prediction candidate.

8. An encoding apparatus using a skip mode, the encoding apparatus comprising:
a motion information candidate group generating unit for obtaining a plurality of motion information candidates of a current prediction unit by using at least one prediction unit related to the current prediction unit;
a most probable prediction candidate determining unit for determining a most probable predictor candidate that is most likely to be selected from among the plurality of motion information candidates, according to a certain standard; and
a motion information encoding unit for, when a prediction mode of the current prediction unit is a most probable skip mode using the determined most probable prediction candidate, encoding a flag indicating the most probable skip mode.

9. The encoding apparatus of claim 8, wherein, when the prediction mode of the current prediction unit is a non-most probable skip mode using a motion information candidate instead of the most probable prediction candidate, the motion information encoding unit determines a motion information candidate other than the most probable prediction candidate from among the plurality of motion information candidates, as motion information about the current prediction unit, and encodes a flag indicating the non-most probable skip mode and index information about the motion information candidate other than the most probable prediction candidate.

10. A decoding method using a skip mode, the decoding method comprising:
obtaining a plurality of motion information candidates of a current prediction unit by using at least one prediction unit related to the current prediction unit;
determining a most probable predictor candidate that is most likely to be selected from among the plurality of motion information candidates, according to a certain standard;
obtaining a flag indicating a prediction mode of the current prediction unit from a bitstream; and
when the flag indicates a most probable skip mode using the most probable prediction candidate, obtaining the most probable prediction candidate as motion information of the current prediction unit.

11. The method of claim 10, further comprising:
when the flag indicates a non-most probable skip mode using a motion information candidate instead of the most probable prediction candidate, obtaining index information indicating motion information of the current prediction unit, from the bitstream; and
obtaining the motion information of the current prediction unit by using the obtained index information.

12. A decoding apparatus using a skip mode, the decoding apparatus comprising:
a motion information candidate group generating unit for obtaining a plurality of motion information candidates of a current prediction unit by using at least one prediction unit related to the current prediction unit;
a most probable prediction candidate determining unit for determining a most probable predictor candidate that is most likely to be selected from among the plurality of motion information candidates, according to a certain standard;
an entropy decoding unit for obtaining a flag indicating a prediction mode of the current prediction unit from a bitstream; and
a motion information decoding unit for, when the flag indicates a most probable skip mode using the most probable prediction candidate, obtaining the most probable prediction candidate as motion information of the current prediction unit.

13. The decoding apparatus of claim 12, wherein, when the flag indicates a non-most probable skip mode using a motion information candidate instead of the most probable prediction candidate, the entropy decoding unit obtains index information indicating motion information of the current prediction unit, from the bitstream; and obtains the motion information of the current prediction unit by using the obtained index information.

14. A computer readable recording medium having recorded thereon a program for executing the method of claim 1.

15. A computer readable recording medium having recorded thereon a program for executing the method of claim 10.
